# FASCICULE DE BREVET EUROPEEN

(11) **EP 1 212 541 B1**
(45) Date de publication et mention de la délivrance du brevet: **14.01.2004**
(21) Numéro de dépôt: 00962640.9
(22) Date de dépôt: 14.09.2000
(51) Int. Cl.: F16C 19/14, F16C 33/32, F16C 33/62

(54) **ROULEMENT A BILLES HYBRIDE A CONTACT OBLIQUE, ET BUTEE AXIALE LE COMPORTANT**
HYBRIDES SCHRÄGKUGELLAGER UND DAMIT VERSEHENE AXIALLAGERVORRICHTUNG
HYBRID BALL BEARING WITH OBLIQUE CONTACT, AND AXIAL STOP COMPRISING SAME

(30) Priorité: 17.09.1999 FR 9911651
(43) Date de publication de la demande: 12.06.2002
(73) Titulaire: SNFA, 94200 Ivry sur Seine (FR)
(72) Inventeur: BIBET, Alain, Jean, F-59990 Maresches (FR); CAHEZ, Jean-Pierre, André, F-92320 Chatillon (FR)
(74) Mandataire: Bérogin, Francis
(86) Numéro de dépôt international: PCT/FR2000/002544
(87) Numéro de publication internationale: WO 2001/021970

(56) Documents cités:
- WO-A-99/23390
- DE-A- 1 907 897
- FR-A- 2 519 105
- FR-A- 2 755 733
- US-A- 4 886 585
- US-A- 5 522 667
- PATENT ABSTRACTS OF JAPAN vol. 016, no. 057 (M-1210), 13 février 1992 (1992-02-13) & JP 03 255224 A (MITSUBISHI ELECTRIC CORP), 14 novembre 1991 (1991-11-14)

## Description

L'invention concerne un roulement à billes, du type à contact oblique, comprenant une rangée de billes disposées entre et en contact roulant avec une gorge de roulement intérieure d'une bague extérieure en acier et une gorge de roulement extérieure d'une bague intérieure en acier, la gorge extérieure ayant sa concavité tournée radialement vers l'extérieur du roulement et, de préférence également, axialement vers l'un des deux côtés du roulement, et la gorge intérieure ayant sa concavité tournée radialement vers l'axe du roulement et axialement vers l'autre côté du roulement, de sorte que les deux gorges sont sensiblement en regard l'une de l'autre, les billes étant espacées les unes des autres en direction circonférentielle autour de l'axe du roulement par une cage à billes disposée entre les bagues.

Un tel roulement est connu du document FR 2 519 105 A.

L'invention concerne plus particulièrement un roulement à billes du type précité, destiné à être monté empilé axialement en batterie, avec d'autres roulements du même type pour constituer une butée axiale à billes à partir de roulements à billes de grande précision, par exemple de niveau ABEC7, en particulier de qualité aéronautique.

Pour l'articulation en pas ou en incidence de pales de rotors arrière ou principaux d'hélicoptères, par rapport au moyeu de ces rotors, on a déjà utilisé des butées axiales à billes, permettant simultanément de retenir chaque pale contre la force centrifuge qui la sollicite lorsque le rotor est en rotation, et de commander sa rotation discontinue et sur une plage angulaire relativement faible, par rapport au moyeu, pour assurer le changement de pas de la pale. Une telle butée axiale est constituée d'une batterie de roulements à billes à contact oblique empilés axialement de sorte que leur contact oblique soit orienté dans une même direction correspondant à un sens axial de charge de la butée à billes.

Dans les roulements à billes à contact oblique utilisés pour constituer de telles butées axiales à billes, les billes et les bagues sont en acier. Ceci a pour inconvénient qu'un phénomène de faux-brinelling au niveau des contacts entre les billes et les bagues en acier provoque des usures localisées correspondant à l'amplitude d'oscillation des pales en pas, sous une fréquence particulière, correspondant à la commande de pas, et qui peut être par exemple de l'ordre de 24 Hz. Ces usures sont jugées rédhibitoires après des temps de fonctionnement de l'ordre de 250 à 350 heures, alors que le potentiel demandé peut être supérieur à 1000 heures. Il en résulte la nécessité de démonter les rotors et de déposer leurs pales pour remplacer la batterie de roulements à billes constituant la butée axiale à billes. Ces opérations de démontage et remontage des rotors pour remplacer les butées à billes sont extrêmement pénalisantes aux plans financier et logistique.

De plus, pour éviter un phénomène de fretting-corrosion sur le diamètre extérieur de la bague extérieure et sur l'alésage de la bague intérieure, il est connu de recouvrir les faces correspondantes des bagues intérieure et extérieure d'un dépôt de cuivre.

Le problème à la base de l'invention est de proposer un roulement à billes du type précité, permettant d'éliminer les effets de faux-brinelling sur les bagues des roulements en plus de l'élimination des effets de fretting-corrosion sur le diamètre extérieur des bagues extérieures et sur l'alésage des bagues intérieures des roulements empilés axialement pour constituer une butée axiale à billes.

A cet effet, le roulement à billes à contact oblique selon l'invention, du type présenté ci-dessus, se caractérise en ce que les billes sont en céramique, au moins en surface, et les bagues en acier sont revêtues sur toute leur surface d'une couche de sulfure de molybdène (MoSx) ou de nitrure de titane et d'aluminium (TiAlN).

Avantageusement, cette couche de MoSx ou de TiAlN est une couche déposée par pulvérisation cathodique, qui permet un excellent accrochage de la couche sur la matrice en acier de chaque bague.

Avantageusement de plus, les billes sont frittées en céramique, ce qui procure en outre un gain de masse de l'ordre de 10 %, et avantageusement la céramique est au moins en partie constituée de Si3N4 ou de TiC.

Un tel roulement bénéficie ainsi de l'excellent comportement tribologique, sous forte charge axiale et niveau vibratoire associé, du type de celui auxquelles sont soumises les butées axiales à billes des rotors d'hélicoptères, du couple de matériaux en contact, c'est-à-dire de la céramique des billes et de la couche de MoSx ou de TiAlN des bagues en acier.

Avantageusement de plus, l'acier de la bague extérieure comme l'acier de la bague intérieure sont choisis parmi les aciers à roulement traditionnels, de préférence du type 100C6 ou M50.

La cage à billes du roulement peut avoir une structure connue et être monobloc et moulée en une matière synthétique, et se centrer sur les billes.

Avantageusement, la matière synthétique de la cage, de préférence du polyamide 6.6, peut être chargée d'un additif ayant des propriétés de lubrification, de préférence du sulfure de molybdène (MoS2), de sorte que la cage constitue un réservoir de lubrifiant sec, qui est libéré vers les billes et les gorges de roulements, par l'usure progressive de la cage.

L'invention a également pour objet une butée axiale à billes, qui se caractérise en ce qu'elle comprend une batterie de plusieurs roulements à billes à contact oblique tels que définis ci-dessus, et empilés axialement en contact les uns avec les autres, d'une part, par leurs bagues intérieures, et, d'autre part, par leurs bagues extérieures, avec leur contact oblique incliné dans une même direction correspondant à un sens axial de charge de la butée à billes.

En outre, pour permettre une précharge dans le sens de l'effort axial minimum que doit subir la butée à billes, cette dernière comprend avantageusement de plus un roulement à billes à contact oblique supplémentaire, monté à une extrémité axiale de l'empilement des autres roulements à billes à contact oblique, et constituant un roulement de précharge dans le sens axial opposé au sens de charge des autres roulements à billes dudit empilement axial.

L'invention concerne enfin l'application d'une butée axiale à billes telle que définie ci-dessus à l'articulation en pas d'une pale d'un rotor d'hélicoptère par rapport au moyeu dudit rotor.

D'autres avantages et caractéristiques de l'invention ressortiront de la description donnée ci-dessous, à titre non limitatif, d'un exemple de réalisation décrit en référence aux dessins annexés sur lesquels :
- la figure 1 est une vue en coupe axiale d'une butée axiale à billes comprenant sept roulements à billes à contact oblique, selon l'invention,
- la figure 2 est une coupe transversale à plus grande échelle de l'un des six roulements de charge identiques de la butée axiale de la figure 1,
- la figure 3 est une coupe transversale à plus grande échelle du septième roulement à billes de la butée axiale de la figure 1, ce septième roulement à billes étant un roulement de précharge,
- la figure 4 représente à plus grande échelle un détail de la figure 1, montrant l'appui axial du roulement de précharge de la figure 3 contre l'empilement axial de la batterie des six roulements de charge selon la figure 2,
- la figure 5 est une coupe axiale de la cage à billes de l'un des six roulements de charge de la butée axiale de la figure 1,
- la figure 6 représente à plus grande échelle le détail de l'extrémité inférieure de la coupe de la figure 5, et
- la figure 7 est une coupe partielle selon VII-VII de la figure 5.

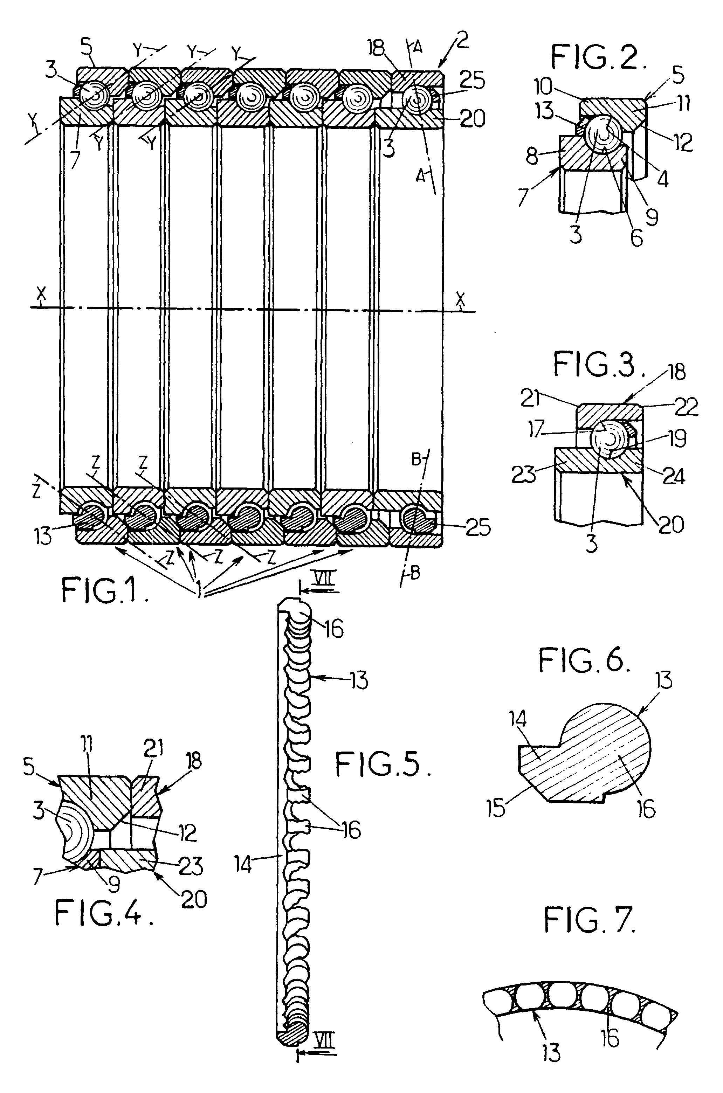

La figure 1 représente une butée axiale à billes constituée par l'empilement axial de sept roulements à billes à contact oblique, dont une batterie de six roulements de charge 1 identiques les uns aux autres et empilés axialement, et un septième roulement à billes à contact oblique 2, qui est un roulement de précharge, à l'extrémité axiale de droite sur la figure 1 de la batterie des six roulements de charge 1.

A noter que le nombre de roulements empilés de la butée à billes est directement lié aux charges à supporter par cette butée à billes et peut donc être supérieur ou inférieur à sept.

Comme représenté sur les figures 1, 2 et 5 à 7, chacun des roulements de charge 1 est un roulement à billes à contact oblique, comprenant une rangée de billes 3 qui sont disposées entre deux pistes de roulements en regard l'une de l'autre, et dont l'une est une gorge de roulement intérieure 4 d'une bague extérieure 5, et l'autre une gorge de roulement extérieure 6 d'une bague intérieure 7. Les gorges de roulement 4 et 6 ont une section par un plan axial passant par l'axe X-X du roulement qui est en forme d'arc-de-cercle dont la concavité, pour la gorge intérieure 4, est tournée radialement vers l'axe X-X du roulement 1 et axialement ou latéralement du côté opposé au roulement de précharge 2, tandis que la concavité de la gorge extérieure 6 est tournée radialement vers l'extérieur du roulement 1 et axialement ou latéralement du côté du roulement de précharge 2. Il en résulte, pour chacun des six roulements de charge 1, un contact oblique des billes 3 entre les gorges 4 et 6, contre lesquelles les billes 3 sont en contact roulant, qui s'effectue selon des génératrices d'un cône centré sur l'axe X-X des roulements 1 et 2, et donc de la butée à billes, cône dont la trace dans le plan de coupe de la figure 1 est représentée par les axes parallèles Y-Y (en haut de la figure 1) et Z-Z (en bas de la figure 1).

En raison de cette géométrie des gorges de roulement 4 et 6, la gorge extérieure 6 est ménagée entre deux parties périphériques latérales de la bague intérieure 7 dont l'une 8, à gauche sur les figures 1 et 2, a son diamètre extérieur supérieur à celui de l'autre partie périphérique latérale 9, alors que les deux parties périphériques latérales 8 et 9 de la bague intérieure 7 ont le même alésage ou diamètre intérieur. De manière correspondante, la gorge de roulement intérieure 4 est formée dans la bague extérieure 5 entre deux parties périphériques latérales de cette bague 5 dont l'une 10, sur la gauche des figures 1 et 2, et donc du même côté que la partie périphérique latérale 8 de la bague intérieure 7, présente un alésage ou diamètre intérieur supérieur à celui de l'autre partie périphérique latérale 11 de cette même bague extérieure 5, dont les deux parties périphériques latérales 10 et 11 ont le même diamètre extérieur. De plus, la bague extérieure 5 est décalée axialement par rapport à la bague intérieure 7, du côté du roulement de précharge 2, c'est-à-dire dans le sens axial (selon l'axe X-X de la butée à billes) correspondant au sens d'application de l'effort axial maximum que la butée à billes est destinée à supporter. Enfin, la partie périphérique latérale 11 de la bague extérieure 5 présente, dans sa partie radiale interne, un chanfrein tronconique 12, divergent du côté du roulement de précharge 2, pour permettre, dans l'empilement axial de la batterie de roulements de charge 1, le contact axial de la face latérale de cette partie périphérique latérale 11 contre la face latérale en regard de l'autre partie périphérique latérale 10 de la bague extérieure 5 du roulement de charge 1 immédiatement voisin dans l'empilement axial, sans interférer avec une cage à billes 13 qui retient les billes 3 espacées les unes des autres en direction circonférentielle autour de l'axe X-X de chaque roulement 1, cette cage 13 étant disposée entre les bagues 5 et 7 du roulement 1.

Les figures 5 à 7 montrent que la cage 13 est monobloc et comporte une partie périphérique latérale 14, de section transversale sensiblement rectangulaire avec un sommet radial externe et latéral externe 15 qui est chanfreiné, la partie périphérique latérale 14 supportant, en saillie sensiblement radialement vers l'intérieur (vers l'axe X-X) et axialement du côté opposé au sommet chanfreiné 15, des plots 16 en forme sensiblement de disques circulaires à faces latérales opposées concaves en calottes sphériques, qui viennent chacun se loger entre les gorges de roulement 4 et 6 et entre deux billes 3 voisines pour assurer un centrage de la cage 13 sur les billes 3, tandis que la partie périphérique latérale 14 de la cage 13 se loge entre les parties périphériques latérales 8 et 10 respectivement de la bague intérieure 7 et de la bague extérieure 5.

Le roulement de précharge 2 est également un roulement à billes à contact oblique, dont les billes 3 sont identiques à celles des roulements de charge 1, et sont montées en contact roulant entre deux pistes de roulement sensiblement en regard l'une de l'autre, dont l'une est une gorge de roulement intérieure 17 d'une bague extérieure 18, et l'autre une gorge de roulement extérieure 19 d'une bague intérieure 20. Comme représenté sur les figures 1 et 3, la concavité de la gorge de roulement intérieure 17 est tournée radialement vers l'axe X-X et axialement ou latéralement vers l'extérieur de la butée à billes, du côté opposé aux roulements de charge 1, et la gorge de roulement intérieure 17 est ainsi ménagée entre deux parties périphériques latérales 21 et 22 de la bague extérieure 18 dont l'une 21 (sur la gauche des figures 1 et 3) est de plus petit alésage ou diamètre intérieur que l'autre 22, les deux parties périphériques latérales 21 et 22 ayant le même diamètre extérieur, tandis que la concavité de la gorge de roulement extérieure 19 de la bague intérieure 20 est tournée radialement vers l'extérieur, entre deux parties périphériques latérales 23 et 24 de la bague intérieure 20 qui ont les mêmes alésage et diamètre extérieur. Il en résulte que le contact oblique des billes 3 du roulement de précharge 2 avec les bagues 18 et 20 est moins incliné sur la direction radiale que les contacts obliques des roulements de charge 1, l'inclinaison du contact oblique du roulement de précharge 2 étant en outre dans le sens opposé à celui des inclinaisons des contacts obliques des roulements de charge 1 (voir figure 1, sur laquelle les axes A-A en haut et B-B en bas représentent les traces dans le plan de coupe des génératrices du cône des contacts obliques des billes 3 entre les bagues 18 et 20 du roulement de précharge 2).

Le roulement de précharge 2, dont les billes 3 sont également espacées les unes des autres en direction circonférentielle autour de l'axe X-X par une cage à billes 25 de structure analogue à celle de la cage 13, mais sensiblement symétrique par rapport à un plan radial, est ainsi adapté à reprendre l'effort axial minimum s'exerçant sur la butée à billes, dans le sens axial opposé au sens de charge de l'effort maximum, et sert ainsi à précharger la butée à billes lors de son montage en configuration d'utilisation.

Les figures 1 et 4 montrent que, dans l'empilement axial des roulements de charge 1 et du roulement de précharge 2, les roulements de charge 1 sont également en contact axial les uns avec les autres par leur bague intérieure 7, par laquelle le roulement de charge 1 directement adjacent au roulement de précharge 2 est également en appui axial contre la bague intérieure 20 de ce dernier, dont la bague extérieure 18 est axialement décalée par rapport à sa bague intérieure 20 dans le même sens que sur les roulements de charge 1. Ceci permet à cette bague extérieure 18 d'être axialement en contact par sa partie périphérique latérale 21 avec la partie périphérique latérale 11 chanfreinée en 12 de la bague extérieure 5 du roulement de charge 1 voisin.

Dans ces roulements 1 et 2, toutes les billes 3 sont frittées en céramique, par exemple en Si3N4 ou TiC. Les bagues 5 et 7 des roulements 1 et les bagues 18 et 20 du roulement de précharge 2 sont en un acier à roulement traditionnel, par exemple de type 100C6 ou M50, et sont revêtues sur toute leur surface d'une couche de sulfure de molybdène (MoSx), avec de préférence x égal à ou voisin de 1,7, ou de nitrure de titane et d'aluminium (TiAIN), qui a été déposée par pulvérisation cathodique, c'est-à-dire par un procédé dit « P.V.D. » (Physical Vapour Deposition), tel que le procédé connu sous le nom de marque déposée « TINALOX » et mis en oeuvre par la société allemande CemeCon GmbH, Talbotstrasse 21-D-52068 AACHEN - Allemagne. La pulvérisation cathodique peut également être assurée par la mise en oeuvre du procédé P.V.D. développé par le C.E.N.G. (Centre d'Essais Nucléaires de Grenoble) du C.E.A. (Commissariat à l'Energie Atomique) en France, procédé connu sous la dénomination « MoSx » permettant d'obtenir une pulvérisation cathodique de sulfure de molybdène avec une structure colonnaire de dureté élevée.

Sur des roulements hybrides ainsi obtenus, il est important de noter que le revêtement de MoSx ou de TiAlN n'est pas seulement présent sur les gorges de roulement 4, 6, 17 et 19 des bagues 5, 7, 18 et 20 des roulements 1 et 2, mais également sur leurs autres surfaces, de l'alésage comme du diamètre extérieur et des faces latérales par lesquelles ces bagues sont en appui axial les unes contre les autres.

Le bon comportement tribologique de la céramique des billes 3 en contact avec la couche de MoSx ou de TiAlN des bagues des roulements permet d'éliminer les effets de faux-brinelling sur ces bagues 5, 7, 18 et 20. En outre, un cuivrage appliqué sur le diamètre extérieur des bagues extérieures 5 et 18 et sur l'alésage ou diamètre intérieur des bagues intérieures 7 et 20 des roulements de charge 1 et du roulement de précharge 2 permet d'éliminer les effets de fretting-corrosion, par exemple entre un manchon de pale de rotor d'hélicoptère, dans lequel les bagues extérieures 5 et 18 de la butée axiale à billes sont logées et dont elles sont rendues solidaires en rotation, et un arbre ou bras du moyeu du rotor, autour duquel les bagues intérieures 7 et 20 des roulements de charge 1 et du roulement de précharge 2 sont emmanchées et dont elles sont rendues solidaires en rotation, pour permettre la commande de pas de la pale par rotation autour de l'arbre ou bras du moyeu.

Les cages 13 et 25, monoblocs et qui se centrent chacune sur les billes 3 correspondantes, sont chacune moulée en une matière synthétique éventuellement chargée d'un additif choisi pour pouvoir agir comme lubrifiant sec entre les billes 3 et les bagues lors de l'usure des cages 13 et 25.

Dans cet exemple, chaque cage 13 ou 25 est avantageusement en polyamide 6.6 chargé en MoS2, de sorte que la cage 13 ou 25 constitue un réservoir de sulfure de molybdène libéré comme lubrifiant sec entre les billes 3 et les gorges de roulement au fur et à mesure de l'usure des cages 13 et 25.

Dans une butée axiale à billes telle que décrite ci-dessus et représentée en coupe sur la figure 1, l'ensemble des bagues extérieures 5 et 18, des bagues intérieures 7 et 20, des cages 13 et 25 et des billes 3 des roulements de charge 1 et du roulement de précharge 2 est un ensemble appairé.

Dans son application comme butée axiale à billes pour la retenue d'une pale de rotor par son pied contre les forces centrifuges qui sollicitent la pale en rotation tout en permettant l'articulation en pas de la pale par rotation discontinue sur une plage angulaire limitée par rapport à un bras ou arbre radial du moyeu correspondant, la butée à billes selon l'invention permet d'atteindre 600 heures de fonctionnement suivant des cycles opérationnels de l'hélicoptère sans regraissage, ce qui double sensiblement la durée de vie des butées à billes constituées par une batterie de roulements à billes à contact oblique traditionnels, par rapport auxquels les roulements à billes selon l'invention offrent en outre un gain de masse substantiel, de l'ordre de 10 %.

## Revendications

1. Roulement à billes, du type à contact oblique, comprenant une rangée de billes (3) disposées entre et en contact roulant avec une gorge de roulement intérieure (4, 17) d'une bague extérieure (5, 18) en acier et une gorge de roulement extérieure (6, 19) d'une bague intérieure (7, 20) en acier, la gorge extérieure (6, 19) ayant sa concavité tournée radialement vers l'extérieur du roulement (1, 2) et, de préférence également, axialement vers l'un des deux côtés du roulement (1, 2), et la gorge intérieure (4, 17) ayant sa concavité tournée radialement vers l'axe (X-X) du roulement (1, 2) et axialement vers l'autre côté du roulement (1, 2), de sorte que les gorges (4, 6 ; 17, 19) sont sensiblement en regard l'une de l'autre, les billes (3) étant espacées les unes des autres en direction circonférentielle autour de l'axe (X-X) du roulement par une cage (13, 25) à billes disposée entre les bagues (5, 7 ; 18, 20),
**caractérisé en ce que** les billes (3) sont en céramique, au moins en surface, et les bagues en acier (5, 7 ; 18, 20) sont revêtues sur toute leur surface d'une couche de sulfure de molybdène (MoSx) ou de nitrure de titane et d'aluminium (TiAlN).

2. Roulement à billes selon la revendication 1, **caractérisé en ce que** la couche de MoSx ou de TiAlN est une couche déposée par pulvérisation cathodique.

3. Roulement à billes selon l'une des revendications 1 et 2, **caractérisé en ce que** les billes (3) sont frittées en céramique.

4. Roulement à billes selon l'une quelconque des revendications 1 à 3, **caractérisé en ce que** la céramique est au moins en partie constituée de Si3N4 ou de TiC.

5. Roulement à billes selon l'une quelconque des revendications 1 à 4, **caractérisé en ce que** l'acier de la bague extérieure (5, 18) et l'acier de la bague intérieure (7, 20) sont choisis parmi les aciers à roulement traditionnels, de préférence du type 100C6 ou M50.

6. Roulement à billes selon l'une quelconque des revendications 1 à 5, **caractérisé en ce que** la cage (13, 25) est monobloc et moulée en une matière synthétique, et se centre sur les billes (3).

7. Roulement à billes selon la revendication 6, **caractérisé en ce que** la matière synthétique de la cage (13, 25), de préférence du polyamide 6.6, est chargée d'un additif ayant des propriétés de lubrification, de préférence du sulfure de molybdène (MoS2).

8. Butée axiale à billes, **caractérisée en ce qu'**elle comprend une batterie de plusieurs roulements (1) à billes (3) à contact oblique selon l'une quelconque des revendications 1 à 7, empilés axialement en contact les uns avec les autres, d'une part, par leurs bagues intérieures (7), et, d'autre part, par leurs bagues extérieures (5), avec leur contact oblique incliné dans une même direction correspondant à un sens axial de charge de la butée à billes.

9. Butée axiale à billes selon la revendication 8, **caractérisée en ce qu'**elle comprend un roulement (2) à billes (3) à contact oblique supplémentaire, monté à une extrémité axiale de l'empilement des autres roulements (1) à billes (3) à contact oblique, et constituant un roulement de précharge dans le sens axial opposé au sens de charge des autres roulements (1) à billes dudit empilement axial.

10. Application d'une butée axiale à billes selon l'une des revendications 8 et 9 à l'articulation en pas d'une pale d'un rotor d'hélicoptère par rapport au moyeu dudit rotor.

## Claims

1. A ball bearing, of the angular contact type, comprising a row of balls (3) arranged between and in rolling contact with an internal raceway groove (4, 17) of an external ring (5, 18) made of steel and an external raceway groove (6, 19) of an internal ring (7, 20) made of steel, the external groove (6, 19) having its concave side facing radially toward the outside of the bearing (1, 2) and preferably also axially toward one of the two sides of the bearing (1, 2), and the internal groove (4, 17) having its concave side facing radially toward the axis (X-X) of the bearing (1, 2) and axially toward the other side of the bearing (1, 2) so that the grooves (4, 6; 17, 19) substantially face one another, the balls (3) being spaced apart in the circumferential direction about the axis (X-X) of the bearing by a ball cage (13, 25) arranged between the rings (5, 7; 18, 20),
**characterized in that** the balls (3) are made of ceramic, at least at the surface, and the steel rings (5, 7; 18, 20) are coated on their entire surface with a layer of molybdenum sulfide (MoSₓ) or titanium aluminum nitride (TiAlN).

2. The ball bearing as claimed in claim 1, **characterized in that** the layer of MoSₓ or TiAlN is a layer deposited by sputtering.

3. The ball bearing as claimed in one of claims 1 and 2, **characterized in that** the balls (3) are sintered and made of ceramic.

4. The ball bearing as claimed in any of claims 1 to 3, **characterized in that** the ceramic consists at least partly of Si₃N₄ or TiC.

5. The ball bearing as claimed in any of claims 1 to 4, **characterized in that** the steel of the external ring (5, 18) and the steel of the internal ring (7, 20) are chosen from conventional bearing steels, preferably of type 100C6 or M50.

6. The ball bearing as claimed in any of claims 1 to 5, **characterized in that** the cage (13, 25) is made as one part and molded from a synthetic material and is centered on the balls (3).

7. The ball bearing as claimed in claim 6, **characterized in that** the synthetic material of the cage (13, 25), preferably nylon-6,6, is filled with an additive with lubricating properties, preferably molybdenum sulfide (MoS₂).

8. An axial thrust ball bearing, **characterized in that** it comprises a battery of several angular contact ball (3) bearings (1) as claimed in any of claims 1 to 7, stacked axially in contact with one another, on the one hand, via their internal rings (7) and, on the other hand, via their external rings (5), with their angular contact at an angle in the same direction corresponding to the direction in which the thrust ball bearing is axially loaded.

9. The axial thrust ball bearing as claimed in claim 8, **characterized in that** it comprises an additional angular contact ball (3) bearing (2), mounted at one axial end of the stack of the other angular contact ball (3) bearings (1) and constituting a bearing that preloads the other ball bearings (1) in the said axial stack in the opposite direction to the direction in which these latter are loaded.

10. An application of an axial thrust ball bearing as claimed in either of claims 8 and 9 to the articulating of a helicopter rotor blade in terms of pitch with respect to the hub of said rotor.

## Patentansprüche

1. Schrägkugellager mit einer Reihe von Kugeln (3), die in rollendem Kontakt zwischen einer inneren Laufrille (4, 17) eines Außenrings (5, 18) aus Stahl und einer äußeren Laufrille (6, 19) eines Innenrings (7, 20) aus Stahl angeordnet sind, wobei die Konkavität der äußeren Laufrille (6, 19) radial in Richtung des Äußeren des Lagers (1, 2) gedreht ist und vorzugsweise auch axial in Richtung einer der beiden Seiten des Lagers (1, 2), und wobei die Konkavität der inneren Laufrille (4, 17). radial in Richtung der Achse (X-X) des Lagers (1, 2) gedreht ist und axial in Richtung der anderen Seite des Lagers (1, 2), so dass die Laufrillen (4, 6; 17, 19) einander im Wesentlichen gegenüberliegen, wobei die Kugeln (3) voneinander in Umfangsrichtung um die Achse (X-X) des Lagers herum mittels eines Kugelkäfigs (13, 25), der zwischen den Rillen (5, 7; 18, 20) angeordnet ist, beabstandet sind,
**dadurch gekennzeichnet, dass** die Kugeln (3) zumindest an ihrer Oberfläche aus Keramik bestehen und dass die Stahlringe (5, 7; 18, 20) auf ihrer gesamten Oberfläche mit einer Schicht aus Molybdänsulfid (MoSx) oder aus einem Titan- und Aluminiumnitrid (TiAlN) beschichtet sind.

2. Kugellager nach Anspruch 1, **dadurch gekennzeichnet, dass** die Schicht aus MoSx oder aus TiAlN eine durch Kathodenzerstäubung abgeschiedene Schicht ist.

3. Kugellager nach einem der Ansprüche 1 und 2, **dadurch gekennzeichnet, dass** die Kugeln (3) aus Keramik gesintert sind.

4. Kugellager nach einem der Ansprüche 1 bis 3, **dadurch gekennzeichnet, dass** die Keramik zumindest teilweise aus Si3N4 oder TiC besteht.

5. Kugellager nach einem der Ansprüche 1 bis 4, **dadurch gekennzeichnet, dass** der Stahl des Außenrings (5, 18) und der Stahl des Innenrings (7, 20) aus den traditionellen Wälzlagerstählen ausgewählt sind, vorzugsweise 100C6 oder M50.

6. Kugellager nach einem der Ansprüche 1 bis 5, **dadurch gekennzeichnet, dass** der Käfig (13, 25) einstückig ist, aus einem synthetischen Material geformt ist und sich an den Kugeln (3) zentriert.

7. Kugellager nach Anspruch 6, **dadurch gekennzeichnet, dass** das synthetische Material des Käfigs (13, 25), vorzugsweise aus Polyamid 6.6, mit einem Zusatz versehen ist, der schmierende Eigenschaften hat, vorzugsweise aus Molybdänsulfid (MoS2).

8. Axialkugellager, **dadurch gekennzeichnet, dass** es eine Batterie aus mehreren Schrägkugellagern (1) gemäß einem der Ansprüche 1 bis 7 aufweist, die einerseits über ihre Innenringe (7) und andererseits über ihre Außenringe (5) axial in Kontakt miteinander gestapelt sind, wobei ihr Schrägkontakt in die gleiche Richtung entsprechend einem axialen Sinn der Belastung des Axialkugellagers geneigt ist.

9. Axialkugellager nach Anspruch 8, **dadurch gekennzeichnet, dass** es ein zusätzliches Schrägkugellager (2) aufweist, das an einem axialen Ende des Stapels der anderen Schrägkugellager (1) angebracht ist und ein Lager für eine Vorbelastung im axialen Sinne bildet, der dem Sinn der Belastung der anderen Schrägkugellager (1) dieser axialen Stapelung entgegengerichtet ist.

10. Verwendung eines Axialkugellagers nach einem der Ansprüche 8 und 9 für die schrittweise Schwenkbarkeit [articulation en pas] eines Blattes eines Helikopterrotors bezüglich der Nabe dieses Rotors.
